# EUROPEAN PATENT APPLICATION

(11) **EP 3 674 981 A1**
(43) Date of publication of application: **01.07.2020**
(21) Application number: 19218876.1
(22) Date of filing: 20.12.2019
(51) Int. Cl.: G06K 19/02, G06K 19/077, G06Q 50/04

(54) **METHOD FOR PRODUCTION MANAGEMENT OF KNIT PRODUCTS AND PRODUCTION MANAGEMENT SYSTEM**

(30) Priority: 28.12.2018 JP 2018247592
(71) Applicant: SHIMA SEIKI MFG., LTD., Wakayama 641-8511 (JP)
(72) Inventor: ARIKITA, Reiji, Wakayama, 641-8511 (JP)
(74) Representative: Schmidbauer, Andreas Konrad

(57) **Abstract**

A knitting machine (10) knits yarn-like ID tags (6) in knit products (50), and data of production management of the knit products (50) are associated with said ID tags (6) for making the production management of knit products easy.

## Description

### Field of the Invention

The present invention relates to production management of knit products.

### Background Art

JP 2005-154984A (Patent Document 1) discloses to attach a yarn with an RFID in a woven product and so on (Fig. 8). The RFID is fixed in the woven product and is used for anti-counterfeiting.

### Prior Art Documents

### Patent Document

Patent Document 1: JP2005-154984A

### Summary of the Invention

### Problems to be Solved

Patent Document 1 does not disclose the production management of knit products by RFIDs. Further, as long as the inventor knows, it has not been carried out to associate defects data occurred during knitting with ID tags. With respect to knit products, defects such as the breakings and occurrences of swelling in knitting yarns and tension abnormalities of knitting yarns (the deviations of tensions applied to knitting yarns out of predetermined ranges) may occur. These defects are detectable by the knitting machines themselves. In addition, there may be present other defects such as failures, for example, scratches in the knit products, presences of oily streaks in knit products according to machine oil and so on, and obliquely aligned stitches out of the wale directions. These defects are detectable by human eyes, image sensors equipped within knitting machines, and so on.

For the production management of knit products, the item numbers, sizes, and colors of the knit products, the lot numbers of knitting yarns, and IDs of knitting machines used are effective. In addition, with respect to custom-made knit products, data such as order ID are necessary. Further, data such as the material of the yarn used in the knit product are useful when recovering the yarn from the knit product. In addition, data such as the production area, manufacturer, production period of the knit product improve the traceability of the knit product. Moreover, yarn-like ID tags include tape-like ID tags, rod-like ID tags, and so on.

The objects of the invention are to make the attachment of ID tags to knit products easy with attaching the ID tags automatically by knitting machines, and to make the production management of the knit products easy by the attached ID tags.

### Means for Solving the Problems

According to a method for production management of knit products of the invention, at least a yarn-like ID tag is knitted in a knit product by a knitting machine and data of production management of the knit product are associated with said ID tag.

A production management system of knit products according to the invention comprises: a knitting machine knitting knit products and knitting ID tags in the knit products; a means for associating data of production management of the knit products with said ID tags;
and
a means for retrieving the data associated with said ID tags.

Since data relating to production management of knit products are associated with ID tags, the production management of knit products is made easier, according to the invention. >From the data associated with the ID tags, the species and positions of defects to be checked are made clear at the time of inspection. Further, item numbers, sizes, colors, and so on, are verifiable with the order. When delivering to shops, displaying, selling to consumers, and so on, item numbers, sizes, colors of the knit product and so on, are verifiable. They make the production management of knit products easier.

According to the invention, yarn-like ID tags are knitted and are automatically attached in knit products by a knitting machine. Among the production management data, defect data are generated during knitting the knit products. Data regarding the item numbers, sizes and so on, are obviously found when knitting. Thus, when the ID tags are knitted in knit products by a knitting machine, the production management data are easily associated with the ID tags.

Preferably, said ID tag is detachably knitted in the knit product and that said ID tag is removed from the knit product before the completion of sales of the knit product to a consumer. With respect to custom-made knit products, personal information of a consumer is associated with the ID tag, and therefore, it is possible to leak the personal information from the ID tag. Since small and commonly used ID tags are preferable, RFIDs where electrically conductive antennae extend from an IC chip are preferably. When this RFID remains in a knit product, the antennae may cause metal allergy. Therefore, when said ID tag is removed before the completion of sales, these problems are prevented in advance.

Particularly preferably, said ID tag is knitted in the knit product with tuck operation or inlay operation. The tuck operation and the inlay operation allow to attach the ID tag detachably in the knit product. In addition, the ID tag may be fixed in the knit product, for example, by knitting the yarn-like ID tag into the knit product as knit stitches.

Preferably, said ID tag is knitted in a position of the knit product where a mark resultant after the ID tag being pulled out is inconspicuous. When the yarn-like ID tag is pulled out of the knit product, there remains a mark, even when tuck operation or inlay operation is used. Therefore, the ID tag is knitted in a position of the knit product where the mark resultant after the ID tag being pulled out is inconspicuous in order to prevent the product value from lowering. The inconspicuous positions include allowances for seaming, and with respect to pull-overs by seamless knitting, they include sides including flank portions and so on.

Preferably, said data of production management include defect data of the knit product. When defect data are associated with an ID tag, the inspection of the knit product and so are made easy. The defect data include those for breakings and occurrences of swelling in knitting yarns, tension abnormalities of knitting yarns, scratches in the knit products, presences of oily streaks in knit products, and obliquely aligned stitches out of the wale directions.

Preferably, said ID tags are set in a knitting yarn with spacing and said knitting machine detects an ID tag in the yarn so that said ID tag is knitted in a predetermined position of the knit product. Since a predetermined length of such a yarn-like ID tag is knitted in a knitted fabric and then cut, there is a risk that yarn in a portion without an ID tag is knitted in the knit product. With detection of an ID tag, the ID tag is reliably knitted and attached in the knit product.

### Brief Description of drawings

[Fig. 1] A schematic view of a yarn-like RFID used in an embodiment
[Fig. 2] A block diagram of a production management system according to the embodiment
[Fig. 3]A flowchart indicating a production management algorithm according to the embodiment
[Fig. 4]A schematic view indicating an RFID knitted in a knit product according to the embodiment
[Fig. 5] A schematic view of yarn-like RFIDs according to modifications: (A) indicates a rod-like RFID; (B) a film-like RFID; and (C) a tape-like RFID.

### Description of Embodiments

The best embodiment for carrying out the invention will be described as follows. Embodiment

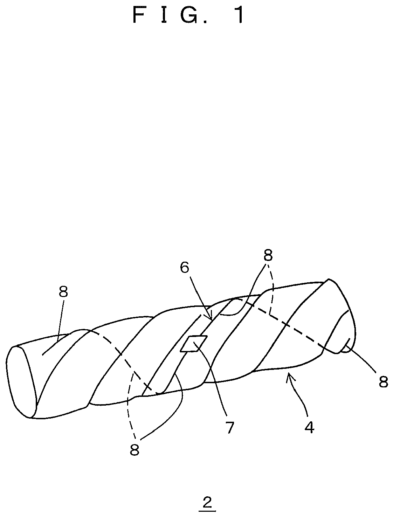

Figs. 1 - 4 indicate an embodiment. Fig. 1 indicates an ID yarn 2, where indicated by 4 is a yarn such as a spun yarn or a mono-fiber and is the main part of the ID yarn 2. On the yarn 4, RFIDs 6 are attached at a predetermined pitch such as 10cm to 1m. An RFID 6 comprises an IC chip 7 and antennae 8, 8 extending to both sides of the IC chip 7. The antennae 8 are metal wires; however, it may be electrically conductive fibers or the like. As shown in Fig. 1, the antennae 8 are twisted around the yarn 8 as the attachment; however, the RFID 6 may be covered by another yarn winding around the yarn 4 and the RFID in order to attach the RFID 6. Another RFID comprising an IC chip 7 having a built-in antenna may be usable. However, the chip becomes larger and more difficult in the attachment to the yarn 4, and it is not preferable. Other ID tags than RFIDs are also usable.

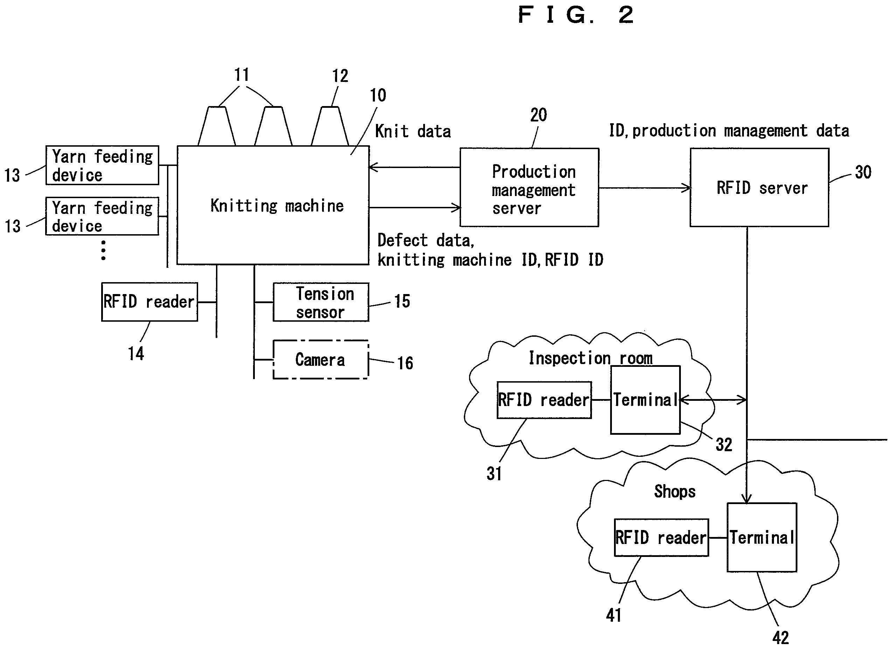

Fig. 2 indicates the production management system where a knitting machine 10, such as a flat knitting machine, knits knit products. Indicated by 11, 12 are yarn sources such as cones: the yarn source 11 supplies a knitting yarn and the yarn source 12 supplies the ID yarn 2. In this specification, yarns used for knit products are distinguished between the ID yarns 2 and other yarns. The knitting machine 10 is provided with at least a needle bed, yarn feeding devices 13 supplying the yarns from the yarn sources 11, 12 to needles in the needle bed. The yarn feeding device 13 that supplies the knitting yarn from the yarn source 11 monitors the tension applied to the knitting yarn in order to monitor the occurrence of yarn breakings, tension fluctuations, and so on. The yarn feeding devices 13 is provided with a yarn feeder and preferably provided with a measuring device of the length of knitting yarn consumed and a positive feeding device of knitting yarn. Further, the knitting machine 10 is provided with an RFID reader 14 for detecting the RFIDs 6 in the ID yarn 2 drawn from the yarn source 12 and for reading the IDs of the RFIDs. When an RFID is detected by the RFID reader 14, the position of the RFID 6 in the ID yarn is detected. RFIDs 6 may be detected by a Hall element or the like, instead of the RFID reader 14. Preferably, the knitting machine 10 is provided with an image sensor 16, such as a camera, for detecting defects in knit products.

The knitting machine 10 knits the ID yarn 2 in knit products, in other words, the ID yarn 2 is attached in the knit products by the knitting machine 10, and thus, an RFID 6 is attached in each knit product. One RFID 6 per one piece of knit product or one RFID 6 per one part in a knit product, such as the body and so on, is enough, and it is preferable to pull out the ID yarn 2 from the knit product before delivering it to a consumer. Therefore, an ID yarn 2 containing only one RFID 6 is attached in a hidden or inconspicuous position of the knit product. Preferable positions for the attachment are those where marks according to pulling out the ID yarns 2 are inconspicuous. For example, sides in a knit product including flanks and allowances for seaming are preferable when the knit product has plural parts. The sides including the flanks are inconspicuous because they are hidden by sleeves or arms. It is preferable to attach the ID yarn 2 with tuck operation or inlay operation in a knit product so that it is easily removed from the knit product. Usually, a separating yarn is used between waste courses at the start of knitting and the knit product for separating them. When the separating yarn is pulled out at the time of inspection of the knit product, and when the tracking of knit product after the inspection is not needed, the ID yarn 2 is usable as the separating yarn.

Indicated by 20 is a production management server and it controls plural knitting machines 10 and supplies knit data to the knitting machines 10 for making the knitting machines knit the knit products. With respect to data relating to the knitting of the knit products, data of the item numbers, sizes, colors of the knit products and lot numbers of the knitting yarns are stored within the production management server 20. Data relating to the possible defects that occurred during the knitting, namely, the defects data, are detected by the knitting machine 10 and are sent to the production management server 20. The defect data include the breakings and swellings of the knitting yarn, the tension abnormalities, scratches in the knitted fabric, oily streaks in the knitted fabric, oblique alignment of stitches, and so on. Among them, the knitting yarn breaks, the tension abnormalities, and so on, are detectable by the tension sensor 15. The scratches in the knitted fabric, the oily streaks in the knitted fabric, the oblique alignment of stitches, and so on, are detectable by the image sensor 16 that monitors the knitted fabric in the knit product. The swellings of the knitting yarn is detectable by the tension sensor 15 and by the image sensor 16 monitoring the knitting yarn. When the knitting machine 10 is not provided with the image sensor 16 or the like, an operator of the knitting machine 10 may input the defect data through the human interface of the knitting machine, for example. The ID of the knitting machine 10 used for the knitting is stored in both the production management server 20 and the knitting machine 10. With respect to custom-made products, data such as order ID are important and are stored in the production management server 20. When post knitting data, for example, those relating to seaming, dyeing, fulling, and so on, are stored in an RFID 6, the additional production management data are associated with the RFID 6 upon the occurrence of the additional data.

The association between the RFID 6 and the production management data is performed: by writing the production management data into the RFID 6 by an RFID writer provided in the knitting machine 10; or by an RFID server 30 storing data relating to an RFID 6 and the production management data in combination. When writing the production management data into the RFID 6, it is preferable to write the data when the knitting is completed. However, when writing into RFID at a position such as a side, the position of the side, at the time of completion of knitting, varies according to knit products. Therefore, a wide range RFID writer or a mechanism moving the RFID writer is necessary. Consequently, it is preferable that the RFID server 30 associates the production management data with the RFID 6. According to the embodiment, when knitting is completed or at a similar timing, the knitting machine 10 sends the ID of the knitting machine, the retrieved ID of the RFID 6, and the defect data, to the production management server 20. The production management server 20 adds, to these data, the item number, size, color, lot number of the knitting yarn, order ID and so on, and sends them to the RFID server 30. The RFID server 30 stores these production management data and associates them with the RFID 6.

At an inspection room, a communication terminal 32 and an RFID reader 31 are provided for performing the inspection, using the production management data associated with the RFID 6. In particular, the presence or absence of defects in a knit product is confirmed according to the defect data. The defect data indicate items to be checked and their positions clearly, and thus, the inspection of the knit product is made easier. An inspection date and the inspection results with respect to the defects and so on, are sent from the terminal 32 to the RFID server 30, and the server 30 associates the inspection data with the RFID 6 as additional data.

Shops are provided with communication terminal 42 and an RFID reader 41, and the production management data of a knit product are acquired from the RFID server 30, according to the ID retrieved from an RFID 6. Data such as the item number, size, color, and so on of the knit product are confirmed, and the defect data and the inspection results are compared with the actual product, if necessary. Further, the order ID for a custom-made product is confirmed with usage of the RFID 6.

When delivering the knit product to a consumer, the ID yarn 2 is pulled out from the knit product in order to prevent metal allergy by the antennae 8 and also in order to keep, for an custom-made product, personal information of the customer secret. Furthermore, the production management with the RFID 6 is also usable for POS (Point of Sales) management. Since the ID yarn 2 is knitted in the knit product with tuck operation or inlay operation, it is easily pulled out of the knit product.

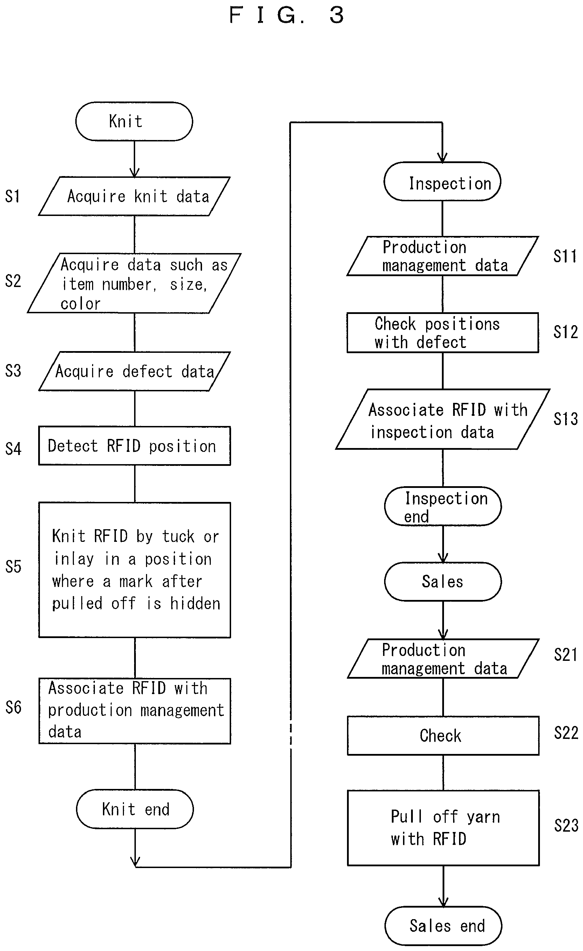

Fig. 3 indicates the production management method according to the embodiment. At a step S1, the knitting machine acquires the knit data and at a step S2, acquires the item number, size, color, lot number of the knitting yarn, and so on. The knitting machine acquires defect data from the tension sensor 15 and so on, during knitting (step S3) and confirms the position of RFID 6 in the ID yarn 2 through the RFID reader 14 (step S4). At a step S5, the knitting machine 10 knits the ID yarn 2 in sides, seaming allowances, or the like, with tuck operation, inlay operation, or the like.

When knitting is completed, by the RFID server 30 or with writing into the RFID 6, the production management data are associated with the RFID 6 (step S6).

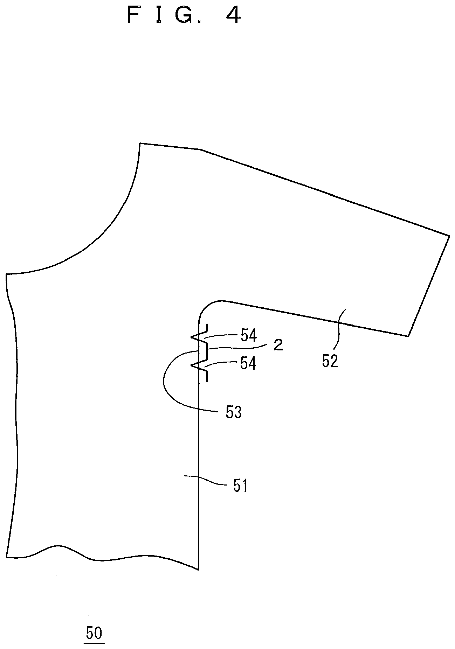

Fig. 4 indicates an example where an ID yarn 2 is knitted in a side 53 of a knit product 50 by two tuck stitches 54, 54. In the drawing, indicated by 51 is a body, by 52 is a sleeve, and the body 51 and the sleeve 52 are knitted with a yarn supplied from a yarn source 11. The ID yarn 2 is attached at two positions near to its both ends to stitches of the side 53 by tuck stitches 54, 54. For example, the knitting machine 10 feeds the knitting yarn from the yarn source 11 through a yarn feeder and knits the knit product. When knitting is performed to a predetermined position for knitting the ID yarn 2, such as the side, the knitting machine 10 moves a yarn feeder for feeding the ID yarn 2 from a position out of the knitted fabric to a position over the knitted fabric and fixes the ID yarn 2 to a stitch comprising the yarn from the yarn source 11 and held on a knitting needle with tuck operation. Then, the knitting machine 10 moves the yarn feeder for the ID yarn 2 to an adequate position so that the ID yarn 2 is not knitted during knitting the knit product. The knitting machine 10 knits further several courses with using the knitting yarn from the yarn source 11 and then, fixes the ID yarn 2 to a stitch of the knitting yarn from the yarn source 11 with tuck operation again. Then, the yarn feeder for the ID yarn 2 is moved out of the knitted fabric. After that, the ID yarn 2 is held by a yarn end holding device not shown and is cut. Between the tuck stitches 54, 54, the ID yarn 2 is floating over the knit product 50 and is easily conceived. When the ID yarn 2 is pulled out, there remains a small mark; however, it is inconspicuous since it is in the side 53. When the ID yarn 2 is temporarily fixed in a seaming allowance with tuck operation, the mark is also not conspicuous. In the case of inlay operation also, it is preferable to fix the ID yarn 2 in the sides or seaming allowances. In the case of inlay operation, the ID yarn 2 is attached by the friction between stitches, and consequently, a hard ID yarn 2 of mono fiber is usable.

When inspecting a knit product, the production management data are acquired (step S11), and an operator compares data such as item number, size, color, and so on, with the actual product and checks positions indicated by the defect data (step S12). Then, the inspection data are associated with the RFID 6 (step S13).

When selling, the production management data are retrieved (step S21), data such as item number, size, color, and so on, are compared and checked with the actual product by a sales person (step S22). After the ID yarn 2 is pulled off, the knit product is delivered to a consumer (step S23). The sales person writes into the production management data in the RFID server 30 data indicating that the product has been sold for POS management.

### Version 1

The knitting machine 10 knits a knit product with feeding the knitting yarn from the yarn source 11 through a yarn feeder. When knitting to a predetermined position for knitting the ID yarn 2, the knitting machine 10 transfers a part of stitches held on knitting needles to knitting needles in an opposite needle bed and moves the yarn feeder for feeding the ID yarn 2 from a position out of the knitted fabric to a position over the knitted fabric so that the ID yarn 2 is inserted into the knitted fabric with inlay operation. When a predetermined length of ID yarn 2 is inserted, the knitting machine 10 fixes the ID yarn 2 with tuck operation to a stitch comprising the knitting yarn from the yarn source 11 and held on a knitting needle and then moves the yarn feeder for the ID yarn 2 out of the knitted fabric. During this movement, the ID yarn 2 is further supplied. Then, the knitting machine 10 holds the ID yarn 2 by the yarn end holding device not shown and cuts the ID yarn. In addition, the knitting machine retransfers back the part of stitches comprising the yarn from the yarn source 11 once transferred. After these steps, the ID yarn 2 becomes a state where it is inserted with the inlay operation along the knitting width direction (the lateral direction) of the knit product.

According to both the embodiment and the version 1, the knitting yarn and the ID yarn 2 are fed from the yarn source 11 and the yarn source 12 through yarn feeders respectively. In addition, the knitting machine 10 knits the ID yarn 2 in the knit product with tuck operation or inlay operation, and then cuts the ID yarn 2. The ID yarn 2 thus knitted is easily detachable from the knit product.

### Version 2

According to the above embodiment and the version 1, the ID yarn 2 is inserted in the knitted fabric with the yarn feeder; however, a yarn feeding device according to version 2 has a cartridge that contains plural ID yarns, each having a predetermined length and having an RFID 6. The yarn feeding device has a chuck not shown, retrieves one ID yarn 2, and moves the ID yarn 2 to a desired position so that the ID yarn is inserted in a knitted fabric with inlay operation. Before the step for inserting the ID yarn 2, the knitting machine 10 knits the knit product with feeding the yarn from the yarn source 11 through the yarn feeder. When knitting to a predetermined position for knitting the ID yarn 2, the knitting machine 10 transfers a part of the stitches held on knitting needles to knitting needles in an opposite needle bed, retrieves one ID yarn 2 from the cartridge by the chuck, and insert it in the knitted fabric. After insertion of the ID yarn 2, the knitting machine 10 retransfers back the part of stitches comprising the yarn from the yarn source 11 once transferred. Thus, the ID yarn 2 becomes a state where it is inserted along the knitting width direction of the knit product with inlay operation. According to the version 2, the ID yarn 2 is easily detachable from the knit product and may be reused after being separated from the knit product, and therefore, the RFID 6 is not wasted.

While clothes are described in the embodiment and the versions, the species of the knit products are arbitrary.

### Supplement

The ID tag may be fixed and left in the knit product, without removed from it. For example, when data such as the material and thickness of the yarn in the knit product, the processing conditions for the yarn, and the type of dye are recorded in the RFID 6, the data are effective when recovering and reusing the yarn from the knit product. Further, these data are effective when cleaning or repairing the knit product. In addition to the above data, when data such as the manufacturer, production area, and production period of the knit product are recorded in the RFID 6, the traceability of knit product is improved. If the ID yarn 2 is left in the knit product without being removed, the ID yarn 2 may be knitted in the knit product as knit stitches and the knitting technique is not limited to inlay or tuck. In addition, knitting a yarn-like ID tag in a knit product includes fixing a rod-like ID tag by inlay operation in the knit product, and so on.

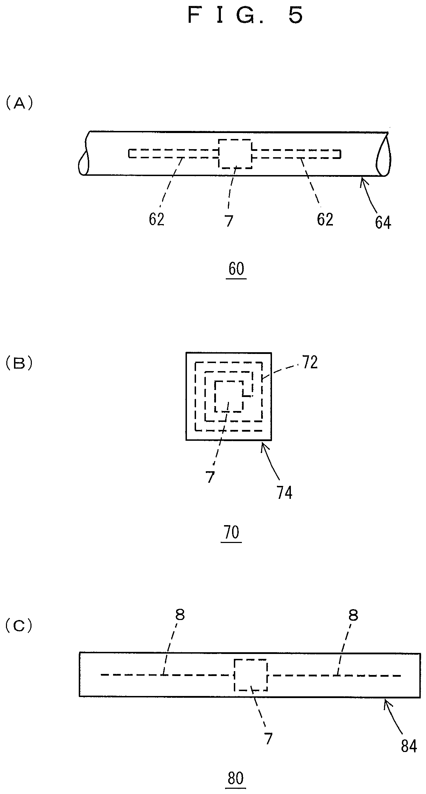

The form of the ID yarn is arbitrary. The ID yarn 60 in Fig. 5 (A) is rod-like, and, in a synthetic resin rod 64, the IC chip 7 and metal antennae 62 that have a larger diameter than the antennae 8 in Fig. 1 are provided. The rod 64 may be flexible or rigid. In the production, the rod-like ID yarn 60 is chucked one by one for example by a gripper and is fixed in a knit product while it knitted. When the position of the ID yarn 60 is based upon a predetermined rule, reading and writing data from and into the IC chip 7 are easy, and therefore, the inlay position is not limited to those suitable for removing the ID yarn. In (B), in a two-layered plastic film 74, for example, quadrilateral, the IC chip 7 and a spiral antenna 72 are fixed and they constitute an RFID 70. The RFID 70 is fixed in the yarn 4 in Fig. 4, for example, by adhesive. In (C), in a two-layered elongated plastic tape 84, the IC chip 7 and the antennae 8 are fixed, and they constitute a tape-like RFID 80. Since the tape-like RFID 80 is elongated and bendable, it may be fixed to the yarn 4 in Fig. 1 by friction. More, the tape-like RFID 80 may be directly knitted in a knit product, without being fixed to the yarn 4.

### Symbol List

- 2: ID yarn
- 4: yarn
- 6: RFID
- 7: IC chip
- 8: antenna
- 10: knitting machine
- 11: yarn source (knitting yarn)
- 12: yarn source (ID yarn)
- 13: yarn feeding device
- 14,31,41: RFID reader
- 15: tension sensor
- 16: image sensor
- 20: production management server
- 30: RFID server
- 32, 42: communication terminal
- 50: knit product
- 51: body
- 52: sleeve
- 53: side
- 54: tuck stitch
- 60: ID yarn
- 62: antenna
- 64: synthetic resin rod
- 70: RFID
- 72: antenna
- 80: tape-like RFID
- 84: plastic tape

## Claims

1. A method for production management of knit products comprising:
a step for knitting at least a yarn-like ID tag (6) in a knit product (50) by a knitting machine (10); and
a step for associating data of production management of the knit product (50) with said ID tag (6).

2. The method for production management of knit products according to claim 1, being **characterized in that** said ID tag (6) is detachably knitted in the knit product (50) and that said ID tag (6) is removed from the knit product (50) before the completion of sales of the knit product (50) to a consumer.

3. The method for production management of knit products according to claim 2, being **characterized in that** said ID tag (6) is knitted in the knit product (50) with tuck operation or inlay operation.

4. The method for production management of knit products according to one of claims 2 and 3, being **characterized in that** said ID tag (6) is knitted in a position of the knit product (50) where a mark resultant after the ID tag being pulled out is inconspicuous.

5. The method for production management of knit products according to one of claims 1 to 4, being **characterized in that** said data of production management include defect data of the knit product (50).

6. The method for production management of knit products according to claim 1, being **characterized in that** said ID tag (6) is fixedly knitted in the knit product (50).

7. The method for production management of knit products according to one of claims 1 to 6, being **characterized in that** said ID tags (6) are set in a knitting yarn (2) with a spacing and that said knitting machine (10) detects an ID tag (6) in the yarn (2) so that said ID tag (6) is knitted in a predetermined position (53) of the knit product (50).

8. A production management system of knit products comprising:
a knitting machine knitting knit products (50) and knitting ID tags (6) in the knit products (50);
a means (10, 30) for associating data of production management of the knit products (50) with said ID tags (6); and
a means (14, 31, 41) for retrieving the data associated with said ID tags (6).
